(19) Europäisches Patentamt / European Patent Office / Office européen des brevets

(11) **EP 1 558 720 B1**

(12) **FASCICULE DE BREVET EUROPEEN**

(45) Date de publication et mention
de la délivrance du brevet:
**14.10.2009 Bulletin 2009/42**

(51) Int Cl.:
*C11D 3/37* *(2006.01)*     *C11D 1/62* *(2006.01)*
*C11D 3/00* *(2006.01)*

(21) Numéro de dépôt: **03778466.7**

(22) Date de dépôt: **27.10.2003**

(86) Numéro de dépôt international:
**PCT/FR2003/003183**

(87) Numéro de publication internationale:
**WO 2004/044114 (27.05.2004 Gazette 2004/22)**

(54) **COMPOSITION D'ANTIFROISSAGE COMPRENANT UN COPOLYMERE A ARCHITECTURE CONTRÔLEE, POUR ARTICLES EN FIBRES TEXTILES**

COPOLYMER MIT EINER KONTROLLIERTEN ARCHITEKTUR ENTHALTENDES ANTIFALTENMITTEL FÜR TEXTILIEN

ANTI-CREASING COMPOSITION COMPRISING A COPOLYMER HAVING A CONTROLLED ARCHITECTURE, FOR ITEMS CONSISTING OF TEXTILE FIBRES

(84) Etats contractants désignés:
**AT BE BG CH CY CZ DE DK EE ES FI FR GB GR HU IE IT LI LU MC NL PT RO SE SI SK TR**

(30) Priorité: **07.11.2002 FR 0213950**

(43) Date de publication de la demande:
**03.08.2005 Bulletin 2005/31**

(73) Titulaire: **RHODIA CHIMIE**
**92512 Boulogne Billancourt Cedex (FR)**

(72) Inventeurs:
• **HARRISON, Ian**
  **F-78300 POISSY (FR)**
• **DESTARAC, Mathias**
  **F-75005 PARIS (FR)**
• **GEFFROY, Cédric**
  **Résidence de la Porte de Paris**
  **F-86000 POITIERS (FR)**

(74) Mandataire: **Boittiaux, Vincent et al**
**Rhodia Services,**
**DPI,**
**40, rue de la Haie-Coq**
**93306 Aubervilliers Cedex (FR)**

(56) Documents cités:
**EP-A- 1 099 749**     **EP-A- 1 201 816**
**WO-A-99/55952**     **DE-A- 10 060 373**
**FR-A- 2 813 312**

## Description

La présente invention a pour objet une formulation d'antifroissage aqueuse ou hydroalcoolique pour le traitement après lavage (pour le rinçage ou le repassage) des articles en fibres textiles (le linge en particulier), comprenant au moins un agent tensioactif cationique et un copolymère organique à architecture contrôlée comprenant au moins un bloc polymère organique hydrophobe et au moins un bloc polymère organique hydrophile de charge globale nulle ou non-opposée à celle de l'agent tensioactif cationique dans la formulation et le milieu de traitement ; elle a également pour objet l'utilisation, dans une formulation aqueuse ou hydroalcoolique pour le traitement après lavage (pour le rinçage ou le repassage) des articles en fibres textiles (le linge en particulier), comprenant au moins un agent tensioactif cationique, dudit copolymère comme agent apportant des propriétés d'anti-froissage ou de facilité de repassage aux articles.

Des copolymères comprenant un ou des blocs cationiques ou potentiellement cationiques et un ou des blocs autres ont déjà été décrits comme agent permettant d'améliorer le moussage de formulations de lavage à la main de la vaisselle ou du linge, de formulations cosmétiques de nettoyage de la peau ou du cheveu, ou de formulations dans des domaines autres (WO 00/71591 et WO 00/71660).

Par ailleurs le document WO 99/55952 des formulations d'antifroissage comprenant un tensioactif non ionique un copolymère insoluble comprenant des unités carboxyliques et/ou un copolympère à blocs siliconé. Les formulations effectivement mises en oeuvre ne comprennent toutefois pas de tensioactif cationique et le doucment ne fait pas état des interactions entre un tel tensioactif et le copolymère siliconé.

La Demanderesse a maintenant trouvé que la présence, dans une formulation aqueuse ou hydroalcoolique comprenant au moins un agent tensioactif cationique, pour le traitement après lavage (pour le rinçage ou le repassage ) des articles en fibres textiles (le linge en particulier), d'un copolymère organique à architecture contrôlée comprenant au moins un bloc polymère organique hydrophobe B et au moins un bloc polymère organique hydrophile de charge globale nulle ou non-opposée à celle de l'agent tensioactif cationique dans la formulation et le milieu de traitement, permet d'apporter auxdits articles des propriétés d'anti-froissage et/ou de facilité de repassage.

Un premier objet de l'invention consiste en une formulation d'antifroissage aqueuse ou hydroalcoolique comprenant au moins un agent tensioactif cationique (TAC), pour le traitement après lavage en milieu aqueux ou hydroalcoolique des articles en fibres textiles, ladite formulation étant caractérisée en ce qu'elle comprend en outre au moins un copolymère à architecture contrôlée (C) soluble ou dispersable en milieu aqueux ou

hydroalcoolique, compatible avec l'agent tensioactif (TAC) au pH de ladite formulation et au pH d'utilisation de ladite formulation, et comprenant

- au moins un bloc polymère organique hydrophobe B, non-ionique et
- au moins un bloc polymère organique A ionique ou ionisable, présentant une charge globale nulle ou non-opposée à celle de l'agent tensioactif cationique (TAC) au pH de la formulation ou d'utilisation de la formulation,

- le rapport pondéral ensemble des blocs B/ ensemble des blocs A allant de 0,01 à 1, de préférence de 0,1 à 1,
- la charge globale du copolymère (C) étant nulle ou non-opposée à celle de l'agent tensioactif cationique (TAC), que ce soit au pH de la formulation ou au pH d'utilisation de la formulation,

ledit copolymère à architecture contrôlée (C) étant présent au sein de la formulation selon une quantité permettant d'apporter auxdits articles des propriétés d'anti-froissage et/ou de facilité de repassage.

Ladite formulation peut être :

* une composition de rinçage, se présentant sous forme d'une dispersion ou d'une solution aqueuse concentrée, susceptible de former, par dilution, un bain de rinçage, à mettre en contact avec les articles à rincer, lesdits articles ayant été notamment préalablement soumis à une opération de lavage principal ; ou
* une composition aqueuse de repassage sous forme d'une dispersion ou d'une solution aqueuse, à déposer directement, sans dilution, par exemple par vaporisation, sur les articles secs à repasser.

Un deuxième objet de l'invention consiste en l'utilisation, dans une formulation aqueuse ou hydroalcoolique comprenant au moins un agent tensioactif cationique (TAC), destinée au traitement après lavage des articles en fibres textiles, d'au moins un copolymère à architecture contrôlée (C) soluble ou dispersable en milieu aqueux ou hydroalcoolique, compatible avec l'agent tensioactif (TAC) au pH de ladite formulation et au pH d'utilisation de ladite formulation, et comprenant

- au moins un bloc polymère organique hydrophobe B, non-ionique et
- au moins un bloc polymère organique A ionique ou ionisable, présentant une charge globale nulle ou non-opposée à celle de l'agent tensioactif cationique (TAC) au pH de la formulation ou d'utilisation de la formulation,

- le rapport pondéral ensemble des blocs B / ensemble des blocs A allant de 0,01 à 1, de préférence de 0,1 à 1,
- la charge globale du copolymère (C) étant nulle ou non-opposée à celle de l'agent tensioactif cationique (TAC), que ce soit au pH de la formulation ou au pH d'utilisation de la formulation

   comme agent permettant d'apporter auxdits articles des propriétés d'anti-froissage et/ou de facilité de repassage.

On entend ici par copolymère à architecture contrôlée tout copolymère comprenant au moins deux blocs polymères différents, ledit copolymère pouvant être :

• linéaire (copolymère dits « à blocs »)
• ramifié (copolymère peigne ou greffé)
• ou en étoile.

Les copolymères « à blocs » linéaires ont plus particulièrement une structure comprenant deux blocs (diblocs) ou trois blocs (triblocs).

Les copolymères à architecture contrôlée de structure ramifiée (peigne ou greffé) présentent, de manière préférentielle, un squelette en polymère B hydrophobe comprenant des segments pendants en polymère A.

En ce qui concerne les copolymères à architecture contrôlée de structure étoile, plusieurs possibilités sont envisageables.

Ainsi,

• au moins un bras de l'étoile est un bloc B, les autres bras étant en un bloc A ou inversement ; ou bien
• au moins un bras de l'étoile est en au moins un bloc B et en au moins un bloc A, les autres bras étant en un bloc B ou en un bloc A, ou inversement ; ou bien
• préférentiellement, chaque bras de l'étoile est en au moins un bloc B et en au moins un bloc A

Il est précisé que chaque bloc du copolymère à architecture contrôlée (C) peut être constitué d'un homopolymère ou d'un copolymère statistique ou séquencé ou encore présenter un gradient de concentration des monomères le long de la chaîne du bloc concerné.

D'une manière préférentielle, il ledit copolymère à architecture contrôlée (C) est un copolymère « à blocs », notamment d'un copolymère dibloc A-B.

Le pH de la formulation dans laquelle ledit copolymère à architecture contrôlée (C) est présent selon l'invention, peut aller de 2,5 à 11.

Le pH d'utilisation de ladite formulation, peut aller de 5 à 10, selon l'usage recherché.

Lorsqu'il s'agit

- d'une formulation de rinçage, le pH du bain de rinçage est généralement de l'ordre 10 à 6, le pH dudit bain diminuant au fur et à mesure des étapes successives de rinçage de l'opération de rinçage ou au contraire augmentant au fur et à mesure des étapes successives de rinçage de l'opération de rinçage lorsqu'il s'agit d'une formulation acide de rinçage ;
- d'une formulation de repassage, le pH de ladite formulation est généralement de l'ordre 5 à 9.

La nature des blocs A et B et les quantités relatives des blocs A et B sont telles que ledit copolymère à architecture contrôlée (C) est soluble ou dispersable en milieu aqueux ou hydroalcoolique, et compatible avec l'agent tensioactif cationique (TAC), que ce soit au pH de ladite formulation ou au pH d'utilisation de ladite formulation.

L'expression « copolymère à architecture contrôlée (C) soluble ou dispersable » signifie que ledit copolymère (C) ne forme pas dans le milieu considéré de solution macroscopique diphasique dans les conditions de mise en oeuvre. Le terme « compatible avec l'agent tensioactif cationique (TAC) » signifie ici que ledit copolymère n'est pas susceptible d'entraîner la formation d'aggrégats à l'état non dispersé dans le milieu considéré comprenant ledit agent tensioactif cationique (TAC).

La charge globale du copolymère (C) est nulle ou non-opposée à celle de l'agent tensioactif cationique (TAC), que ce soit au pH de la formulation ou au pH d'utilisation de la formulation.

Le terme « hydrophobe » est utilisé dans son sens usuel de « qui n'a pas d'affinité pour l'eau » ; en ce qui concerne le bloc B, cela signifie que le polymère organique dont il est constitué, pris seul, formerait une solution macroscopique diphasique dans de l'eau distillée à 25°C.

Le terme « hydrophile » est également utilisé dans son sens usuel de « qui a de l'affinité pour l'eau », c'est-à-dire n'est pas susceptible de former une solution macroscopique diphasique dans de l'eau distillée à 25°C.

D'une manière préférentielle, les blocs A et B dérivent de monomères éthyléniquement insaturés.

Lorsqu'il s'agit des blocs A ou B, le terme « polymère » sera utilisé pour désigner aussi bien des homopolymères que des copolymères. De même « le bloc A » ou « le bloc B » désigne respectivement l'ensemble des blocs A ou l'ensemble des blocs B, qu'il s'agisse d'un copolymère (C) linéaire « à blocs » (dibloc ou multiblocs), ramifié ou en étoile.

Le bloc B est en un polymère hydrophobe. D'une manière préférentielle, il est essentiellement non-ionique ou non-ionisable au pH de la formulation ou d'utilisation de ladite composition. Tout préférentiellement il est non-ionique.

Ledit polymère hydrophobe constituant du bloc B, dérive d'au moins un monomère non-ionique hydrophobe. Ledit polymère peut en outre contenir des unités non-ioniques hydrophiles dérivées d'au moins un monomère non-ionique hydrophile, en quantité suffisamment faible pour conserver au bloc son caractère hydrophobe ; cette quantité peut aller jusqu'à 10% molaire de l'ensemble des monomères dont dérive ledit bloc B.

De même, ledit polymère peut en outre contenir des unités ioniques ou ou potentiellement ionique (notamment cationique ou potentiellement cationique) dérivées d'au moins un monomère ionique ou potentiellement ionique (notamment cationique ou potentiellement cationique), ce en quantité mineure, ce afin que ledit polymère conserve son caractère hydrophobe et essentiellement non-ionique ; cette quantité peut aller jusqu'à 10% molaire de l'ensemble des monomères dont dérive ledit bloc B.

A titre d'exemples de monomères non-ioniques hydrophobes dont peut dériver le bloc B, on peut mentionner :

- les monomères vinylaromatiques tels que styrène, alpha-méthylstyrène, vinyltoluène...
- les halogénures de vinyle ou de vinylidène, comme le chlorure de vinyle, chlorure de vinylidène
- les $C_1$-$C_{12}$ alkylesters d'acides $\alpha$-$\beta$ monoéthyléniquement insaturés tels que les acrylates et méthacrylates de méthyle, éthyle, butyle, acrylate de 2-éthylhexyle ...
- les esters de vinyle ou d'allyle d'acides carboxyliques saturés tels que les acétates, propionates, versatates, stéarates ... de vinyle ou d'allyle
- les nitriles $\alpha$-$\beta$ monoéthyléniquement insaturés contenant de 3 à 12 atomes de carbone, comme l'acrylonitrile, le methacrylonitrile ...
- les $\alpha$-oléfines comme l'éthylène ...
- les diènes conjugués, comme le butadiène, l'isoprène, le chloroprène ...

A titre d'exemples de monomères hydrophiles non-ioniques éventuels, on peut mentionner :

- les hydroxyalkylesters d'acides $\alpha$-$\beta$ éthyléniquement insaturés comme les acrylates et méthacrylates d'hydroxyéthyle, d'hydroxypropyle, le glycérol monométhacrylate...
- les amides $\alpha$-$\beta$ éthyléniquement insaturés comme l'acrylamide, le N,N-diméthyl méthacrylamide, le N-méthylolacrylamide ...
- les monomères $\alpha$-$\beta$ éthyléniquement insaturés portant un segment polyoxyalkyléné hydrosoluble du type polyoxyde d'éthylène, comme les polyoxyde d'éthylène $\alpha$-méthacrylates (BISOMER S20W, S10W, ... de LAPORTE) ou $\alpha,\omega$-diméthacrylates, le SIPOMER BEM de RHODIA (méthacrylate de polyoxyéthylène $\omega$-béhényle), le SIPOMER SEM-25 de RHODIA (méthacrylate de polyoxyéthylène $\omega$-tristyrylphényle) ...
- les monomères $\alpha$-$\beta$ éthyléniquement insaturés précurseurs d'unités ou de segments hydrophiles tels que l'acétate de vinyle qui, une fois polymérisé, peut être hydrolysé pour engendrer des unités alcool vinylique ou des segments alcool polyvinylique
- les vinylpyrrolidones
- les monomères $\alpha$-$\beta$ éthyléniquement insaturés de type uréido et en particulier le méthacrylamido de 2-imidazolidinone éthyle (Sipomer WAM II de RHODIA).

Des exemples de monomères ioniques ou potentiellement ioniques pouvant être mis en oeuvre en quantité mineure sont mentionnés plus loin (concernant le bloc A).

La masse moleculaire moyenne en nombre du ou des blocs hydrophobes B, peut aller de 500 à 100000, de préférence de 500 à 25000 g/mol, mesurée par chromatographie d'exclusion stérique.

Le bloc polymère A est ionique ou ionisable, présentant une charge globale nulle ou non-opposée à celle de l'agent tensioactif cationique (TAC) au pH de la formulation ou d'utilisation de la formulation.

Sa charge globale au pH de la formulation ou d'utilisation de la formulation, est telle que le copolymère (C) est comptatible avec l'agent tensioactif (TAC).

La charge globale du bloc polymère A est nulle ou non-opposée à celle de l'agent tensioactif cationique (TAC), lorsque la charge globale du bloc polymère B est nulle dans cette même gamme de pH.

Lorsque le bloc polymère B présente, dans cette même gamme de pH, une charge ionique, celle-ci est à prendre en compte dans le choix du bloc A, afin que le copolymère (C) soit comptatible avec l'agent tensioactif (TAC) et présente de préférence une charge globale nulle ou non-opposée à celle de l'agent tensioactif cationique (TAC).

Le polymère constituant du bloc A, peut être choisi parmi

a) les polymères dérivés d'au moins un monomère hydrophile potentiellement cationique au pH de la formulation ou d'utilisation de la formulation et/ou d'au moins un monomère hydrophile cationique, et éventuellement d'au moins un monomère non-ionique ;

b) les polymères dérivés d'au moins un monomère hydrophile zwitterionique et éventuellement d'au moins un monomère non-ionique.

La nature et la quantité des unités non-ioniques éventuelles présentes dans le bloc A sont telles que le copolymère (C) est soluble ou dispersable en milieu aqueux ou hydroalcoolique.

Ces unités non-ioniques dérivent d'au moins un monomère non-ionique, en quantité pouvant représenter jusqu'à 80% molaire de la composition monomère dont dérive le polymère constituant du bloc A.

Ledit polymère constituant du bloc A peut en outre contenir des unités anioniques ou potentiellement anioniques dérivées d'au moins un monomère anionique ou potentiellement anionique. La quantité d'unités anioniques ou potentiellement anioniques éventuelles est telle que le copolymère (C) reste compatible avec l'agent tensioactif (TAC), et, telle que la charge globale du copolymère (C) soit nulle ou non-opposée à celle de l'agent tensioactif cationique (TAC), ou bien telle que la charge globale dudit bloc A soit nulle ou non-opposée à celle de l'agent tensioactif cationique (TAC) lorsque la charge du bloc B est nulle.

Le bloc B hydrophobe est non-ionique et le bloc A ionique ou ionisable présente une charge globale nulle ou non-opposée à celle de l'agent tensioactif cationique (TAC) au pH de la formulation ou d'utilisation de la formulation.

A titre d'exemples de monomères hydrophiles potentiellement cationiques, on peut mentionner :

- les N,N(dialkylaminoωalkyl)amides d'acides carboxyliques α-β monoéthyléniquement insaturés comme le N,N-diméthylaminométhyl -acrylamide ou -méthacrylamide, le 2(N,N-diméthylamino)éthyl-acrylamide ou -méthacrylamide, le 3(N,N-diméthylamino)propyl-acrylamide ou -méthacrylamide, le 4(N,N-diméthylamino)butyl-acrylamide ou -méthacrylamide
- les aminoesters α-β monoéthyléniquement insaturés comme le 2(diméthyl amino)éthyl acrylate (ADAM), 2(diméthyl amino)éthyl méthacrylate (DMAM), le 3(diméthyl amino)propyl méthacrylate, le 2(tertiobutylamino)éthyl méthacrylate, le 2(dipentylamino)éthyl méthacrylate, le 2(diéthylamino)éthyl méthacrylate
- les vinylpyridines
- la vinyl amine
- les vinylimidazolines
- des monomères précurseurs de fonctions amines tels que le N-vinyl formamide, le N-vinyl acétamide, ... qui engendrent des fonctions amines primaires par simple hydrolyse acide ou basique.

A titre d'exemples de monomères hydrophiles cationiques, on peut mentionner :

- les monomères ammoniumacryloyles ou acryloyloxy comme le chlorure de triméthylammoniumpropylméthacrylate, le chlorure ou le bromure de triméthylammoniuméthylacrylamide ou méthacrylamide, le méthylsulfate de triméthylammoniumbutylacrylamide ou méthacrylamide, le méthylsulfate de triméthylammoniumpropylméthacrylamide (MES), le chlorure de (3-méthacrylamidopropyl)triméthylammonium (MAPTAC), le chlorure de (3-acrylamidopropyl) triméthylammonium (APTAC), le chlorure ou le méthylsulfate de méthacryloyloxyéthyl triméthylammonium, le chlorure d'acryloyloxyéthyl triméthylammonium ;
- le bromure, chlorure ou méthylsulfate de 1-éthyl 2-vinylpyridinium, de 1-éthyl 4-vinylpyridinium ;
- les monomères N,N-dialkyldiallylamines comme le chlorure de N,N-diméthyldiallylammonium (DADMAC) ;
- les monomères polyquaternaires comme le chlorure de diméthylaminopropylméthacrylamide,N-(3-chloro-2-hydroxypropyl) triméthylammonium (DIQUAT) ...

A titre d'exemples de monomères zwitterioniques, on peut mentionner :

- les monomère sulfobétaïnes comme le sulfopropyl diméthylammonium éthyl méthacrylate (SPE de RASCHIG), le sulfopropyl diméthylammonium propyl méhacrylamide (SPP de RASCHIG), le sulfopropyl 2-vinylpyridinium (SPV de RASCHIG)
- les monomères phosphobétaïnes, comme le phosphatoéthyl triméthylammonium éthyl méthacrylate
- les monomères carboxybétaïnes.

Des exemples de monomères non-ioniques hydrophiles ou hydrophobes ont déjà été mentionnés plus haut (concernant le bloc B).

A titre d'exemples de monomères anioniques ou potentiellement anioniques, on peut mentionner :

- des monomères possédant au moins une fonction carboxylique, comme les acides carboxyliques α-β éthyléniquement insaturés ou les anhydrides correspondants, tels que les acides ou anhydrides acrylique, méthacrylique, maleique, l'acide fumarique, l'acide itaconique, le N-méthacroyl alanine, le N-acryloylglycine et leurs sels hydrosolubles
- des monomères précurseurs de fonctions carboxylates, comme l'acrylate de tertiobutyle, qui engendrent, après polymérisation, des fonctions carboxyliques par hydrolyse.
- des monomères possédant au moins une fonction sulfate ou sulfonate, comme le 2-sulfooxyethyl méthacrylate, l'acide vinylbenzène sulfonique, l'acide allyl sulfonique, le 2-acrylamido-2méthylpropane sulfonique, l'acrylate ou le méthacrylate de sulfoethyle, l'acrylate ou le méthacrylate de sulfopropyle et leurs sels hydrosolubles
- des monomères possédant au moins une fonction phosphonate ou phosphate, comme l'acide vinylphosphonique,... les esters de phosphates éthyléniquement insaturés tels que les phosphates dérivés du méthacrylate d'hydroxyéthyle (Empicryl 6835 de RHODIA) et ceux dérivés des méthacrylates de polyoxyalkylènes et leurs sels hydrosolubles

La masse moléculaire moyenne en nombre du ou des blocs hydrophiles (A), peut aller de 500 à 100000, de préférence de 500 à 25000 g/mol, mesurée par chromatographie d'exclusion stérique.

De manière particulière, la masse molaire moyenne en nombre du copolymère à architecture contrôlée (C) est comprise entre 1000 et 200 000 g/mol, de préférence entre 1000 et 50 000 g/mol, plus particulièrement entre 3000 et 30 000 g/mol, déterminée par GPC couplée à la méthode MALLS (Multi Angle Laser Light Scattering).

A titre d'exemples de copolymères (C) diblocs, on peut mentionner notamment les copolymères

- polyacrylate de butyle - polyacrylate de 2-diméthylaminoéthyle éventuellement quaternisé
- polyacrylate de butyle - poly(acide acrylique-stat-acrylate de 2-diméthylaminoéthyle quaternisé)

Comme mentionné ci-dessus, le copolymère à architecture contrôlée (C) peut se présenter sous une forme linéaire (multiblocs), sous une forme ramifiée (peigne ou greffée), ou encore sous une forme étoile ; préférentiellement il s'agit d'un copolymère linéaire, de préférence une structure comprenant deux blocs (diblocs) ou trois blocs (triblocs), tout particulièrement diblocs. Chaque bloc du copolymère peut être formé d'un homopolymère ou d'un copolymère statistique ou séquencé.

Lesdits copolymères à blocs sous forme linéaires peuvent être obtenus par toute méthode connue, que ce soit par polymérisation radicalaire, contrôlée ou non, par polymérisation par ouverture de cycle (notamment anionique ou cationique), par polymérisation anionique ou cationique, ou encore par modification chimique d'un polymère.

De manière préférée, on met en oeuvre des méthodes de polymérisation radicalaire dite vivante ou contrôlée.

A titre d'exemple de procédés de polymérisation dite vivante ou contrôlée, on peut notamment se référer à :

- les procédés des demandes WO 98/58974, WO 00/75207 et WO 01/42312 qui mettent en oeuvre une polymérisation radicalaire contrôlée par des agents de contrôle de type xanthates,
- le procédé de polymérisation radicalaire contrôlée par des agents de contrôles de type dithioesters de la demande WO 98/01478,
- le procédé de polymérisation radicalaire contrôlée par des agents de contrôle de type dithiocarbamates de la demande WO 99/31144,
- le procédé de polymérisation radicalaire contrôlée par des agents de contrôle de type dithiocarbazates de la demande WO 02/26836,.
- le procédé de polymérisation radicalaire contrôlée par des agents de contrôle de type dithiophosphoroesters de la demande WO 02/10223, (éventuellement les copolymères à blocs obtenus comme ci-dessus par polymérisation radicalaire contrôlée, peuvent subir une réaction de purification de leur extrémité de chaîne soufrée, par exemple par des procédés de type hydrolyse, oxydation, réduction, pyrolyse ou substitution)
- le procédé de la demande WO 99/03894 qui met en oeuvre une polymérisation en présence de précurseurs nitroxydes,
- le procédé de la demande WO 96/30421 qui utilise une polymérisation radicalaire par transfert d'atome (ATRP),
- le procédé de polymérisation radicalaire contrôlée par des agents de contrôle de type iniferters selon l'enseignement de Otu et al., Makromol. Chem. Rapid. Commun., 3, 127 (1982),
- le procédé de polymérisation radicalaire contrôlée par transfert dégénératif d'iode selon l'enseignement de Tatemoto et al., Jap. 50, 127, 991 (1975), Daikin Kogyo Co ltd Japan et Matyjaszewski et al., Macromolécules, 28, 2093 (1995),
- le procédé de polymérisation radicalaire contrôlée par les dérivés du tetraphényléthane, divulgué par D. Braun et al. Dans Macromol. Symp. 111, 63 (1996), ou encore,
- le procédé de polymérisation radicalaire contrôlée par des complexes organocobalt décrit par Wayland et al. Dans J.Am.Chem.Soc. 116,7973 (1994)
- le procédé de polymérisation radicalaire contrôlée par du diphénylether (WO 00/39169 ou WO 00/37507).

Lorsqu'il s'agit de copolymères à architecture contrôlée greffés ou peignes, ceux-ci peuvent être obtenus par des méthodes dites de greffage direct et copolymérisation.

Le greffage direct consiste à polymériser le(s) monomère(s) choisi(s) par voie radicalaire, en présence du polymère sélectionné pour former le squelette du produit final. Si le couple monomère / squelette ainsi que les conditions opératoires, sont judicieusement choisis, alors il peut y avoir réaction de transfert entre le macroradical en croissance et le squelette. Cette réaction génère un radical sur le squelette et c'est à partir de ce radical que croît le greffon. Le radical primaire issu de l'amorceur peut également contribuer aux réactions de transfert.

Pour ce qui a trait à la copolymérisation, elle met en oeuvre dans un premier temps le greffage à l'extrémité du futur segment pendant, d'une fonction polymérisable par voie radicalaire. Ce greffage peut être réalisé par des méthodes usuelles de chimie organique. Puis, dans un second temps, le macromonomère ainsi obtenu est polymérisé avec le monomère choisi pour former le squelette et on obtient un polymère dit "peigne".

Le greffage peut être réalisé avantageusement en présence d'un agent de contrôle de la polymérisation tel que cité dans ls références ci-dessus.

Les procédés de préparation de polymères en forme d'étoile peuvent être essentiellement classés en deux groupes. Le premier correspond à la formation des bras des polymères à partir d'un composé plurifonctionnel constituant le centre (technique "core-first") (Kennedy, J.P. and coll. Macromolecules, 29, 8631 (1996), Deffieux, A. and coll. Ibid, 25, 6744, (1992), Gnanou, Y. and coll. Ibid, 31, 6748 (1998)) et le second correspond à une méthode où les molécules de polymères qui vont constituer les bras sont d'abord synthétisées et ensuite liées ensemble sur un coeur pour former un polymère en forme d'étoile (technique "arm-first").

A titre d'exemple de synthèse de ce type de polymère, on pourra se référer au brevet WO 00/02939.

Selon l'invention, la formulation comprend un agent tensioactif cationique (TAC).

On entend ici par « agent tensioactif cationique (TAC) » aussi bien un agent tensioactif cationique, qu'un mélange d'agents tensioactifs cationiques, de même qu'un mélange d'au moins an agent tensioactif cationique et d'au moins un agent tensioactif non-ionique ; la quantité éventuelle d'agent tensioactif non-ionique peut représenter jusqu'à 70% du poids de l'ensemble des agents tensioactifs (TAC).

D'une manière toute préférentielle, la formulation selon l'invention ne contient pas d'agent tensioactif anionique.

Parmi les agents tensioactifs cationiques, on peut citer notamment les sels d'ammonium quaternaires de formule

$$R^1 \, R^2 \, R^3 \, R^4 \, N^+ \, X^-$$

où

- R$^1$, R$^2$ et R$^3$ , semblables ou différents, représentent H ou un groupe alkyle contenant moins de 4 atomes de carbone, de préférence 1 ou 2 atome(s) de carbone, éventuellement substitué par une plusieurs fonction(s) hydroxyle(s), ou peuvent former ensemble avec l'atome d'azote N$^+$ au moins un cycle aromatique ou hétérocyclique
- R$^4$ représente un groupe alkyle ou alkényle en C$_8$-C$_{22}$, de préférence en C$_{12}$-C$_{22}$, un groupe aryle ou benzyle, et
- X$^-$ est un anion solubilisant tel que halogénure (par exemple chlorure, bromure, iodure), sulfate ou alkylsulfate (méthylsulfate), carboxylate (acétate, propionate, benzoate), alkyl ou arylsulfonate.

On peut mentionner en particulier les bromures de dodécyltriméthylammonium, de tetradécyltriméthylammonium, de cétyltriméthylammonium, le chlorure de stéaryl pyridinium, le RHODAQUAT® TFR et le RHODAMINE ® C15 commercialisés par RHODIA, le chlorure de cétyltriméthylammonium (Dehyquart ACA et/ou AOR de Cognis), le chlorure de cocobis(2-hydroxyéthyl)éthylammonium (Ethoquad C12 de Akso Nobel).

Peuvent également être cités d'autres agents tensioactifs cationiques ayant des propriétés adoucissantes, comme :

- les sels d'ammonium quaternaires de formule

$$R^{1'} \, R^{2'} \, R^{3'} \, R^{4'} \, N^+ \, X^-$$

où

. R$^{1'}$ et R$^{2'}$, semblables ou différents, représentent H ou un groupe alkyle contenant moins de 4 atomes de carbone, de préférence 1 ou 2 atome(s) de carbone, éventuellement substitué par une plusieurs fonction(s) hydroxyle(s), ou peuvent former ensemble avec l'atome d'azote N$^+$ un cycle hétérocyclique

. R$^{3'}$ et R$^{4'}$ représentent un groupe alkyle ou alkényle en C$_8$-C$_{22}$, de préférence en C$_{10}$-C$_{22}$, un groupe aryle ou benzyle, et

. X$^-$ est un anion tel que halogénure (par exemple chlorure, bromure, iodure), sulfate ou alkylsulfate (méthylsulfate), carboxylate (acétate, propionate, benzoate), alkyl ou arylsulfonate.

On peut mentionner en particulier : les chlorures de dialkyldiméthyl ammonium comme le ditallow diméthyl ammonium chlorure ou méthylsulfate ..., les chlorures d'alkylbenzyldiméthylammonium.

- les sels de $C_{10}$-$C_{25}$alkylimidazolium comme les méthylsulfates de $C_{10}$-$C_{25}$alkylimidazolinium
- les sels de polyamines substituées comme le N-tallow-N,N',N',tri-éthanol-1,3-propylènediamine dichlorure ou diméthylsulfate, N-tallow-N,N,N',N',N'-pentaméthyl-1,3-propylène diamine dichlorure

Parmi les agents tensioactifs non-ioniques pouvant être présents dans les formulation selon l'invention, on peut mentionner notamment

. les alkylphénols polyoxyalkylénés (polyoxyéthylénés, polyoxypropylénés, polyoxybutylénés) dont le substituant alkyle est en $C_6$-$C_{12}$ et contenant de 5 à 25 motifs oxyalkylènes ; à titre d'exemple, on peut citer les TRITON X-45, X-114, X-100 ou X-102 commercialisés par Rohm & Haas Cy. ;
. les glucosamide, glucamide, glycérolamide ;
. les alcools aliphatiques en $C_8$-$C_{22}$ polyoxyalkylénés contenant de 1 à 25 motifs oxyalkylènes (oxyéthylène, oxypropylène) ; à titre d'exemple, on peut citer les TERGITOL 15-S-9, TERGITOL 24-L-6 NMW commercialisés par Union Carbide Corp., NEODOL 45-9, NEODOL 23-65, NEODOL 45-7, NEODOL 45-4 commercialisés par Shell Chemical Cy., KYRO EOB commercialisé par The Procter & Gamble Cy. ;
. les produits résultant de la condensation de l'oxyde d'éthylène, le composé résultant de la condensation de l'oxyde de propylène avec le propylène glycol, tels les PLURONIC commercialisés par BASF ;
. les produits résultant de la condensation de l'oxyde d'éthylène, le composé résultant de la condensation de l'oxyde de propylène avec l'éthylènediamine, tels les TETRONIC commercialisés par BASF ;
. les oxydes d'amines tels que les oxydes d'alkyl $C_{10}$-$C_{18}$ diméthylamines, les oxydes d'alkoxy $C_8$-$C_{22}$ éthyl dihydroxy éthylamines ;
. les alkylpolyglycosides décrits dans US-A-4 565 647 ;
. les amides d'acides gras en $C_8$-$C_{20}$ ;
. les acides gras éthoxylés ;
. les amides gras éthoxylés ;
. les amines éthoxylées
. les amines oxydes.

La formulation selon l'invention est une formulation aqueuse ou hydroalcoolique.
Parmi les alcools pouvant être présents, on peut mentionner l'éthanol, l'isopropanol, le propylèneglycol, le butoxy-éthanol ...
Ces alcools peuvent représenter jusqu'à 70% % du volume de la phase liquide.
D'une manière préférentielle, la phase liquide est de l'eau.
Ladite formulation est particulièrement bien adaptée au traitement après lavage (rinçage ou repassage) du linge, notamment à base coton, en particulier contenant au moins 35% de coton.
Ledit agent tensioactif (TAC) peut représenter de 1 à 60% du poids de la formulation de l'invention, ce en fonction de la concentration de ladite formulation.
Le taux d'extrait sec d'une formulation de rinçage est par exemple de l'ordre de 10 à 50% en poids ; celui d'une formulation de repassage peut être par exemple de l'ordre de 0,5 à 2% en poids.
Pour une bonne réalisation de l'invention, le rapport masse de copolymère à architecture contrôlée (C) / masse d'agent tensioactif (TAC) va de 0,0001 à 10, de préférence de 0,001 à 2. Dans une formulation de rinçage, ce rapport peut aller de 0,0001 à 1, de préférence de 0,0001 à 0,5 , tout préférentiellement de 0,0001 à 0,1.
Dans une formulation de repassage, celui-ci peut aller de préférence de 0,0001 à 2.
D'autres constituants usuels peuvent être présents, à côté de l'agent tensioactif (TAC) et du copolymère à architecture contrôlée (C) dans les formulations selon l'invention.
La nature de ces constituants est fonction de l'usage recherché de ladite formulation.
Les compositions liquides de rinçage des articles en fibres textiles (du linge notamment), peuvent comprendre notamment au moins un agent adoucissant cationique et/ou non-ionique, comme les composés acycliques ammonium quaternaires, les polyamines alkoxylées, les sels diamido ammonium quaternaires, les esters ammonium quaternaires, les sels quaternaires imidazolium, les amines primaires, secodaires ou tertiaires, les amines alcoxylées, les amines cycliques, les dérivés non-ioniques de sucres, ... mentionnés notamment dans WO 00/68352. Des exemples de certains de ces adoucissants cationiques ont déjà été mentionnés plus haut à titre d'agent tensioactif (TAC).
Les agents adoucissants peuvent être présents à raison de 0,5 à 90%, de préférence de 0,5 à 40%, en fonction de la concentration de ladite formulation.

Peuvent également être présents dans les formulations de rinçage :

- des azurants optiques (0,1 à 0,2%);
- des agents anti-transfert de couleur (polyvinylpyrrolidone, polyvinyloxazolidone, polyméthacrylamide... 0,03 à 25%, de préférence 0,1 à 15%)
- des acides (acide chlorhydrique, citrique, phosphorique, benzoïque ...) pour ajuster le pH si nécessaire
- des huiles silicones,
- des huiles ou cires minérales, végétales, animales, hydrocarbonées,
- des colorants,
- des parfums,
- des limiteurs de mousse
- des enzymes
- des agents de blanchiment.

La formulation de l'invention peut être mise en oeuvre pour réaliser une opération de rinçage faisant suite à une opération de lavage à la main ou en machine à laver d'articles en fibres textiles. Ledits articles peuvent être en fibres naturelles et/ou artificielles ou et/synthétiques. Ladite formulation est tout particulièrement intéressante pour le rinçage d'articles en coton ou à base de coton.

Elle peut être mise en oeuvre dans le bain de rinçage, à raison de 0,001 à 5g/l, de préférence de 0,005 à 2g/l, le taux de formulation étant exprimé en matière sèche. Cette opération de rinçage peut être réalisée à température ambiante.

Cette opération de rinçage permet d'apporter auxdits articles, outre des bénéfices classiques de douceur amenées par le ou les agents adoucissants cationiques et/ou non-ioniques , des propriétés d'antifroissage (« antiwrinkle ») et/ou d'aide au repassage (« ease of ironing »).

Lorsqu'il s'agit d'une formulation de repassage, celle-ci peut comprendre en outre, à côté de lagent tensioactif (TAC) et dudit copolymère (C) :

- éventuellement des polymères à base de silicone (de 0,2 à 5%),
- éventuellement des parfums (0,1 à 3%),
- éventuellement des dérivés cellulosiques (0,1 à 3%) comme l'amidon, Ladite formulation peut être pulvérisée directement sur le linge sec avant le repassage.

La pulvérisation de ladite formulation sur le linge permet de faciliter le repassage et de limiter le froissage du linge au porté.

D'une manière préférentielle, la formulation de l'invention est une formulation de rinçage après lavage des article en fibres textiles.

Un troisième objet de l'invention, consiste en un procédé pour améliorer les propriétés d'antifroissage ou d'aide au repassage d'une formulation aqueuse ou hydroalcoolique comprenant au moins un agent tensioactif cationique (TAC), pour le traitement après lavage (pour le rinçage ou le repassage) d'articles en fibres textiles, par addition à ladite formulation d'au moins un copolymère à architecture contrôlée (C) tel que décrit ci-dessus, comme agent permettant d'apporter des propriétés d'anti-froissage et/ou de facilité de repassage auxdits articles traités.

Les quantités d'agent tensioactif (TAC) et de copolymère (C) à mettre en oeuvre, ont déjà été mentionnées ci-dessus.

Les exemples suivants sont donnés à titre illustratif.

Les abréviations données ont la signification

| * P(ABu) | Homopolymère de l'acrylate de butyle (ABu) |
| * P(ADAME) | Bloc homopolymère du diméthylaminoéthyl acrylate(ADAME) |
| * P(ADAMQuat) | Bloc homopolymère du méthyl sulfate de diméthylaminoéthyl acrylate (ADAMQuat) |
| * P(AAstatADAMQuat) | Bloc copolymère statistique de l'acide acrylique et de l'ADAMQuat de rapport pondéral AA/ADAMQuat de 30/70 |
| * K | Facteur 1000 (masse molaire moyenne en nombre exprimée en g/mol |

## Exemple 1

**Synthèse d'un copolymère dibloc Polyacrylate de butyle 2000-Polyacrylate de 2-diméthylaminoéthyle 2000.**

Dans un ballon bicol en verre de 500 ml muni d'un réfrigérant et d'une agitation magnétique et maintenu sous argon, on introduit 75,2 g d'éthanol, 5,2 g de *O*-ethyl-*S*-(1-methoxycarbonyl)ethylenyl) xanthate $(CH_3CHCO_2CH_3)S$ (C=S)OEt et 50 g d'acrylate de butyle. La solution est mise en température à 70°C, et une solution de 1,64 g d'azobi-sisobutyronitrile (AIBN) dans 4,92 g d'acétone et 2,46 g d'éthanol est rajoutée. Deux heures après cet ajout, une solution de 0,82 g d'AIBN dans 2,46 g d'acétone et 1,23 g d'éthanol est additionnée. La réaction est prolongée pendant une heure, suite à la deuxième introduction de l'AIBN.

A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS).

Mn=2150 g/mol.

Au produit maintenu dans le réacteur à 70°C, on ajoute une solution de 0,82 g d'AIBN dans 2,46 g d'acétone et 1,23 g d'éthanol. Une solution de 50 g d'acrylate de 2-diméthylaminoéthyle dans 61,45 g d'éthanol est ensuite introduite pendant 3 heures. Une solution de 0,82 g d'AIBN dans 2,46 g d'acétone et 1,23 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=3800 g/mol.

### Exemple 2

**Synthèse d'un copolymère dibloc Polyacrylate de butyle 4000-Polyacrylate de 2-diméthylaminoéthyle 4000.**

Dans un ballon bicol en verre de 500 ml muni d'un réfrigérant et d'une agitation magnétique et maintenu sous argon, on introduit 75,2 g d'éthanol, 2,6 g de *O*-ethyl-*S*-(1-methoxycarbonyl)ethylenyl) xanthate $(CH_3CHCO_2CH_3)S$ (C=S)OEt et 50 g d'acrylate de butyle. La solution est mise en température à 70°C, et une solution de 0,82 g d'azobi-sisobutyronitrile (AIBN) dans 2,46 g d'acétone et 1,23 g d'éthanol est rajoutée. Deux heures après cet ajout, une solution de 0,41 g d'AIBN dans 1,23 g d'acétone et 0,62 g d'éthanol est additionnée. La réaction est prolongée pendant une heure, suite à la deuxième introduction de l'AIBN.

A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS).

Mn=3800 g/mol.

Au produit maintenu dans le réacteur à 70°C, on ajoute une solution de 0,41 g d'AIBN dans 1,23 g d'acétone et 0,62 g d'éthanol. Une solution de 50 g d'acrylate de 2-diméthylaminoéthyle dans 68,25 g d'éthanol est ensuite introduite pendant 3 heures. Une solution de 0,61 g d'AIBN dans 1,85 g d'acétone et 0,92 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=7500 g/mol.

### Exemple 3

**Synthèse d'un copolymère dibloc Polyacrylate de butyle 4000-Polyacrylate de 2-diméthylaminoéthyle 8000.**

Dans un ballon bicol en verre de 500 ml muni d'un réfrigérant et d'une agitation magnétique et maintenu sous argon, on introduit 60,1 g d'éthanol, 2,08 g de *O*-ethyl-*S*-(1-methoxycarbonyl)ethylenyl) xanthate $(CH_3CHCO_2CH_3)S$ (C=S)OEt et 40 g d'acrylate de butyle. La solution est mise en température à 70°C, et une solution de 0,66 g d'azobisisobutyronitrile (AIBN) dans 1,97 g d'acétone et 0,98 g d'éthanol est rajoutée. Deux heures après cet ajout, une solution de 0,32 g d'AIBN dans 0,98 g d'acétone et 0,49 g d'éthanol est additionnée. La réaction est prolongée pendant une heure, suite à la deuxième introduction de l'AIBN.

A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS).

Mn=4100 g/mol.

Au produit maintenu dans le réacteur à 70°C, on ajoute une solution de 0,32 g d'AIBN dans 0,98 g d'acétone et 0,49 g d'éthanol. Une solution de 80 g d'acrylate de 2-diméthylaminoéthyle dans 114,5 g d'éthanol est ensuite introduite pendant 3 heures. Une solution de 0,49 g d'AIBN dans 1,47 g d'acétone et 0,73 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=10500 g/mol.

## Exemple 4

**Synthèse d'un copolymère dibloc Polyacrylate de butyle 4000-Polyacrylate de 2-diméthylaminoéthyle 20000.**

Dans un ballon bicol en verre de 500 ml muni d'un réfrigérant et d'une agitation magnétique et maintenu sous argon, on introduit 30 g d'éthanol, 1,04 g de $O$-ethyl-$S$-(1-methoxycarbonyl)ethylenyl) xanthate (CH$_3$CHCO$_2$CH$_3$)S(C=S)OEt et 20 g d'acrylate de butyle. La solution est mise en température à 70°C, et une solution de 0,32 g d'azobisisobutyronitrile (AIBN) dans 0,98 g d'acétone et 0,49 g d'éthanol est rajoutée. Deux heures après cet ajout, une solution de 0,16 g d'AIBN dans 0,49 g d'acétone et 0,24 g d'éthanol est additionnée. La réaction est prolongée pendant une heure, suite à la deuxième introduction de l'AIBN. A ce stade, un échantillon est prélevé. La masse molaire moyenne en nombre (Mn) est mesurée par chromatographie d'exclusion stérique dans le dimethylformamide, couplée à un détecteur de diffusion de lumière multi-angles (GPC-MALLS). Mn=4100 g/mol.

Au produit maintenu dans le réacteur à 70°C, on ajoute une solution de 0,16 g d'AIBN dans 0,49 g d'acétone et 0,24 g d'éthanol. Une solution de 100 g d'acrylate de 2-diméthylaminoéthyle dans 147 g d'éthanol est ensuite introduite pendant 3 heures. Une solution de 0,24 g d'AIBN dans 0,73 g d'acétone et 0,36 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=18000 g/mol.

## Exemple 5

**Synthèse d'un copolymère dibloc Polyacrylate de butyle 1000-Polyacrylate de 2-diméthylaminoéthyle 1000.**

Dans un ballon bicol en verre de 500 ml muni d'un réfrigérant et d'une agitation magnétique et maintenu sous argon, on introduit 75,2 g d'éthanol, 10,4 g de $O$-ethyl-$S$-(1-methoxycarbonyl)ethylenyl) xanthate (CH$_3$CHCO$_2$CH$_3$)S(C=S)OEt et 50 g d'acrylate de butyle. La solution est mise en température à 70°C, et une solution de 3,28 g d'azobisisobutyronitrile (AIBN) dans 9,85 g d'acétone et 4,92 g d'éthanol est rajoutée. Deux heures après cet ajout, une solution de 1,64 g d'AIBN dans 4,92 g d'acétone et 2,46 g d'éthanol est additionnée. La réaction est prolongée pendant une heure, suite à la deuxième introduction de l'AIBN. A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=1150 g/mol.

Au produit maintenu dans le réacteur à 70°C, on ajoute une solution de 1,64 g d'AIBN dans 4,92 g d'acétone et 2,46 g d'éthanol. Une solution de 50 g d'acrylate de 2-diméthylaminoéthyle dans 47,9 g d'éthanol est ensuite introduite pendant 3 heures. Une solution de 2,46 g d'AIBN dans 7,39 g d'acétone et 3,69 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=2400 g/mol.

## Exemple 6

**Synthèse d'un copolymère dibloc Polyacrylate de butyle 1000-Polyacrylate de 2-diméthylaminoéthyle 5000.**

Dans un ballon bicol en verre de 500 ml muni d'un réfrigérant et d'une agitation magnétique et maintenu sous argon, on introduit 30,3 g d'éthanol, 4,16 g de $O$-ethyl-$S$-(1-methoxycarbonyl)ethylenyl) xanthate (CH$_3$CHCO$_2$CH$_3$)S(C=S)OEt et 20 g d'acrylate de butyle. La solution est mise en température à 70°C, et une solution de 1,31 g d'azobisisobutyronitrile (AIBN) dans 3,95 g d'acétone et 1,97 g d'éthanol est rajoutée. Deux heures après cet ajout, une solution de 0,65 g d'AIBN dans 1,97 g d'acétone et 0,98 g d'éthanol est additionnée. La réaction est prolongée pendant une heure, suite à la deuxième introduction de l'AIBN.

A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS).

Mn=1200 g/mol.

Au produit maintenu dans le réacteur à 70°C, on ajoute une solution de 0,65 g d'AIBN dans 1,97 g d'acétone et 0,98 g d'éthanol. Une solution de 100 g d'acrylate de 2-diméthylaminoéthyle dans 139 g d'éthanol est ensuite introduite pendant 3 heures. Une solution de 0,98 g d'AIBN dans 2,95 g d'acétone et 1,47 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=6400 g/mol.

## Exemple 7

**Synthèse d'un copolymère dibloc Polyacrylate de butyle 2000-Polyacrylate de 2-diméthylaminoéthyle 10000.**

Dans un ballon bicol en verre de 500 ml muni d'un réfrigérant et d'une agitation magnétique et maintenu sous argon, on introduit 30,1 g d'éthanol, 2,08 g de O-ethyl-S-(1-methoxycarbonyl)ethylenyl) xanthate (CH$_2$CHCO$_2$CH$_3$)S(C=S)OEt et 20 g d'acrylate de butyle. La solution est mise en température à 70°C, et une solution de 0,65 g d'azobisisobutyronitrile (AIBN) dans 1,97 g d'acétone et 0,98 g d'éthanol est rajoutée. Deux heures après cet ajout, une solution de 0,33 g d'AIBN dans 0,98 g d'acétone et 0,49 g d'éthanol est additionnée. La réaction est prolongée pendant une heure, suite à la deuxième introduction de l'AIBN.

A ce stade, un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS).

Mn=2200 g/mol.

Au produit maintenu dans le réacteur à 70°C, on ajoute une solution de 0,33 g d'AIBN dans 0,98 g d'acétone et 0,49 g d'éthanol. Une solution de 100 g d'acrylate de 2-diméthylaminoéthyle dans 144 g d'éthanol est ensuite introduite pendant 3 heures. Une solution de 0,49 g d'AIBN dans 1,47 g d'acétone et 0,73 g d'éthanol est ajoutée deux, quatre et six heures après la fin de l'introduction du monomère. La réaction est stoppée huit heures après la fin d'introduction des monomères.

Un échantillon est prélevé. La masse molaire moyenne en nombre (Mn) est mesurée par chromatographie d'exclusion stérique dans le diméthylformamide, couplée à un détecteur de diffusion de lumière multi-angles (GPC-MALLS). Mn=10900 g/mol.

## Exemple 8

**Synthèse d'un copolymère dibloc Polyacrylate de 2-diméthylaminoéthyle quaternisé 3700-Polyacrylate de butyle 1000.**

Dans un ballon bicol en verre de 500 ml muni d'un réfrigérant et d'une agitation magnétique et maintenu sous argon, on introduit 75,9 g d'isopropanol, 122 g d'eau, 2,99 g de 4,4'-azobis(4-cyanolvaleric acid) (ACP), 4,44 g de O-ethyl-S-(1-methoxycarbonyl)ethylenyl) xanthate (CH$_3$CHCO$_2$CH$_3$)S(C=S)OEt et 100 g d'une solution d'acrylate de 2-diméthylaminoéthyle quaternisé à 80% dans l'eau. La solution est mise en température à 70°C, et la réaction est maintenue pendant 12 heures. Le solvant est ensuite évaporé à l'évaporateur rotatif.

Une analyse RMN1H confirme que le monomère acrylate a été totalement polymérisé.

Le polymère issu de la première étape (87,4 g) est dissous dans 97 g d'eau, et sont ajoutés 160g d'éthanol, 21,33 g d'acrylate de butyle et 1,75 g d'AIBN. Le mélange ainsi obtenu est chauffé à 70°C pendant 12 heures. En fin de réaction, le copolymère dibloc est obtenu.

### Exemple 9

**Synthèse d'un copolymère dibloc Polyacrylate de 2-diméthylaminoéthyle quaternisé 7500-Polyacrylate de butyle 1000.**

Dans un ballon bicol en verre de 500 ml muni d'un réfrigérant et d'une agitation magnétique et maintenu sous argon, on introduit 71 g d'isopropanol, 263 g d'eau, 3,41 g de 4,4'-azobis(4-cyanolvaleric acid) (ACP), 4,23 g de *O*-ethyl-*S*-(1-methoxycarbonyl)ethylenyl) xanthate ($CH_3CHCO_2CH_3$)S(C=S)OEt et 190,4 g d'une solution d'acrylate de 2-diméthylaminoéthyle quaternisé à 80% dans l'eau. La solution est mise en température à 70°C, et la réaction est maintenue pendant 12 heures. Le solvant est ensuite évaporé à l'évaporateur rotatif.
Une analyse RMN1H confirme que le monomère acrylate a été totalement polymérisé.
Le polymère issu de la première étape (160 g) est dissous dans 360 g d'eau, et sont ajoutés 140g d'éthanol, 20,31 g d'acrylate de butyle et 1,67 g d'AIBN. Le mélange ainsi obtenu est chauffé à 70°C pendant 12 heures. En fin de réaction, le copolymère dibloc est obtenu.

### Exemple 10

**Synthèse d'un copolymère dibloc Polyacrylate de butyle 1000-Poly(acide acrylique-stat-acrylate de 2-diméthylaminoéthyle quaternisé) 8000**

Dans un ballon bicol en verre de 500 ml muni d'un réfrigérant et d'une agitation magnétique et maintenu sous argon, on introduit 124,2 g d'éthanol, 13,54 g de *O*-ethyl-*S*-(1-methoxycarbonyl)ethylenyl) xanthate ($CH_3CHCO_2CH_3$) S(C=S)OEt et 65 g d'acrylate de butyle. La solution est mise en température à 70°C, et 4,27 g d'azobisisobutyronitrile (AIBN) sont ajoutés au mélange réactionnel. La réaction est maintenue pendant deux heures à cette température. Une analyse RMN1H confirme que le monomère acrylate a été totalement polymérisé. La masse molaire du polymère est mesurée par chromatographie d'exclusion stérique. Mn=1800 g/mol.
Au polymère issu de la première étape, maintenu à 70°C, sont ajoutés 2,13 g d'azobisisobutyronitrile. Ensuite, un mélange contenant 173,3 g d'acide acrylique, 404,7 g d' acrylate de 2-diméthylaminoéthyl quaternisé, 335 g d'eau et 335 g d'éthanol est additionné pendant 4 heures. Au bout de 2 heures d'introduction, 3,2 g d'AIBN sont introduits. A la fin des 4 heures d'introduction de la solution de monomères, 3,2 g d'AIBN sont à nouveau introduits dans le réacteur. Le réaction est ensuite maintenue à cette température pendant 2 heures supplémentaires.
Une analyse RMN 1 H confirme que la composition du copolymère final correspond à celle attendue.

### Exemple 11 : Tests d'évaluation d'antifroissage

Les formulations de lavage (L) d'une part et de rinçage (R) d'autre part, mises en oeuvre pour réaliser le test d'évaluation d'antifroissage sont les suivantes :

| Formulation de lavage (L)<br>Constituants | % en poids |
|---|---|
| NaTPP | 40 |
| Silicate 2 $SiO_2$, $Na_2O$ | 5 |
| Carbonate de sodium | 5 |
| Sulfate de sodium | 8 |
| CMC blanose 7MXF (HERCULES) | 1 |
| Perborate monohydraté | 15 |
| TAED granulé | 5 |
| Tensioactif anionique Laurylbenzène sulfate (Nansa) | 6 |
| Tensioactif non ionique Symperonic A3 (alcool éthoxylé 3 OE - ICI) | 3 |
| Tensioactif non ionique Symperonic A9 (alcool éthoxylé 9 OE ICI) | 9 |
| Enzymes (espérases, amylases, cellulase, protéase) | 0,5 |
| Parfums | 1 |

(suite)

| Formulation de lavage (L)<br>Constituants | % en poids |
|---|---|
| Polysaccharide anionique (% en sec) | 1,0 |
| Copolyester sulfoné antisalissure REPEL O TEX PF 594 de Rhodia | 0,5 |
| | |
| Formulation de rinçage (R)<br>Constituants | % en poids |
| Tensioactif cationique : Chlorure de ditallowdimethylammonium | 25 % |
| Parfum | 1% |
| HCl pour obtenir un pH = 3 | 0,2% |
| Polymère à tester | 2% |
| Eau | 71,8% |

Méthode d'évaluation

1. Préparation des tissus
2. Traitement des tissus : dans un Tergotomètre par lavage à l'aide de la formulation de lavage (L) suivi d'un rinçage à l'aide de la formulation de rinçage (R) contenant le polymère à tester
3. Froissage des tissus
4. Evaluation du froissage par méthode optique

1. On découpe des éprouvettes de coton désapprêté (fourni sous la référence 2436W par Phoenix Colio Ltd.) de dimensions 10X10 cm. Les éprouvettes de coton sont d'abord repassées afin d'avoir toutes le même niveau de froissage avant lavage.

2. On réalise une opération de lavage dans un appareil de laboratoire Tergotomètre bien connu dans la profession des formulateurs de compositions détergentes. L'appareil simule les effets mécaniques et thermiques des machines à laver de type américain à pulsateur.

Les éprouvettes lavées à l'aide de la formulation de lavage ci-dessus et rincées 2 fois à l'eau puis 1 fois à l'aide de la formulation rinçante (R), dans les conditions suivantes :

- nombre d'éprouvettes par pot du Tergotomètre : 10
- volume d'eau : 1 litre
- eau de dureté française 30°TH obtenue par dilution appropriée d'eau minérale de marque Contrexéville®
- concentration en formulation de lavage (L) : 5 g/l
- température de lavage : 40°C
- durée du lavage : 20 min
- vitesse d'agitation du Tergotomètre : 100 tours/minute
- 2 rinçages à l'eau froide (environ 30°TH)
- 3ème rinçage : formulation de rinçage (R) à une concentration de 7g/litre dans de l'eau froide de dureté 30°TH
- durée de chaque rinçage : 5 minutes

3. Les éprouvettes humides sont ensuite froissées à l'aide d'une presse cylindrique (5,5 cm de diamètre x 7 cm de longueur) ; la pression exercée est de de 20 gxcm$^{-2}$ pendant 90 secondes.
Elles sont ensuites mises à sécher horizontalement.
Cette méthode de froissage permet d'obtenir un froissage reproductible sur tous les tests.

4. Après 24 heures de séchage, on réalise une photographie numérique en couleur d'une aire des éprouvettes sèches, qui est ensuite transformée en 256 niveaux de gris (échelle de gris de 0 à 255).

On compte le nombre de pixels correspondant à chaque niveau de gris.

Pour chaque histogramme obtenu, on mesure l'écart type σ de la distribution du niveau de gris.

Si le froissage est important, la distribution du niveau de gris est large.

σ1 correspond à l'écart type obtenu sur des éprouvettes ayant subies les étapes 1 à 4 ci-dessus, l'opération de rinçage à l'étape 2 de traitement étant toutefois constituée de trois rinçages à l'eau froide (au lieu de deux rinçages à l'eau froide suivis d'un rinçage à l'aide de la formulation de rinçage (R)).

σ2 correspond à l'écart type obtenu avec la formulation de rinçage (R) renfermant le polymère à tester.

σ3 correspond à l'écart type obtenu sur des éprouvettes de départ repassées (étape 1 de préparation des tissus), n'ayant pas subi les étapes 2 et 3 de traitement et de froissage des tissus.

La valeur de performance WR ("Wrinkle Recovery") est donnée par l'équation suivante

$$WR\ (\%) = [(\sigma1-\sigma2)/\sigma1]\ f \times 100$$

f étant un facteur de normalisation, égal à $1/[(\sigma_1-\sigma3)/\sigma1]$

Une valeur de :

- 0% correspond à bénéfice nul
- 100% correspond à une surface non-froissée (surface plate obtenue après repassage)

Les résultats obtenus sont les suivants :

| Bloc A | Bloc B | (C) de l'exemple | % dans (R) | WR % |
|--------|--------|------------------|------------|------|
| P(Abu) 2K | P(ADAME) 2K | 1 | 2% | 65 |
| P(Abu) 4K | P(ADAME) 4K | 2 | 2% | 61 |
| P(Abu) 4K | P(ADAME) 8K | 3 | 2% | 68 |
| P(Abu) 4K | P(ADAME) 20K | 4 | 2% | 63 |
| P(Abu) 1 K | P(ADAME) 1K | 5 | 2% | 63 |
| P(Abu) 1 K | P(ADAME) 5K | 6 | 2% | 67 |
| P(Abu) 2K | P(ADAME) 10K | 7 | 2% | 71 |
| P(Abu) 1 K | P(ADAMQuat) 3,7K | 8 | 2% | 62 |
| P(Abu) 1K | P(ADAMQuat) 7,5K | 9 | 2% | 66 |
| P(ABu) 1K | P(AAstatADAMEQuat) 8K | 10 | 2% | 57 |

### Exemple 12 comparatif

On répète les étapes 1 à 4 du test ci-dessus, la formulation de rinçage mise en oeuvre pour la réalisation du troisième rinçage étant une formulation (R') semblable à (R) mais exempte de polymère à tester.

La valeur de performance WR est de 30%.

On peut constater que la présence d'un copolymère à blocs dans la formulation de rinçage améliore considérablement les propriétés d'antifroissage de la formulation de rinçage.

### Exemple 13

Un test dit « consommateur » a été effectué sur une population de 30 personnes.

Il s'agit d'un test visuel.

La notation des tissus en coton se fait de 1 à 4, 1 correspondant au tissu le moins froissé et 4 au tissu le plus froissé.

Tissus T1.

Des tissus en coton (éprouvettes de coton désapprêté, fourni sous la référence 2436W par Phoenix Colio Ltd.,

de dimensions 10X10 cm) sont introduits dans un lave-linge de marque Miele WT904 et soumis à une opération de lavage à 40°C, à l'aide d'une formulation de lavage commerciale, le liquide de rinçage mis en oeuvre correspondant à la formule de rinçage (R) comprenant 2% du copolymère cationique diblocs P(ABu) 1K - P(ADAMQuat) 7,5K de l'exemple 9.

Les tissus sont laissés sécher à l'air.

Tissus T2

On répète sur des mêmes tissus la même opération de lavage / rinçage /séchage, en mettant en oeuvre une formulation de rinçage (R') semblable à la précédente, mais exempte de copolymère cationique diblocs. Le pourcentage de personnes donnant une réponse préférentielle aux tissus T1 est de 88,9%.
Ceci confirme les résultats de l'exemple 11.

**Revendications**

1. Formulation d'antifroissage aqueuse ou hydroalcoolique comprenant au moins un agent tensioactif cationique (TAC), pour le traitement après lavage en milieu aqueux ou hydroalcoolique des articles en fibres textiles, ladite formulation étant **caractérisée en ce qu'**elle comprend en outre au moins un copolymère à architecture contrôlée (C) soluble ou dispersable en milieu aqueux ou hydroalcoolique, compatible avec l'agent tensioactif (TAC) au pH de ladite formulation et au pH d'utilisation de ladite formulation, et comprenant

   • au moins un bloc polymère organique hydrophobe B, non-ionique et
   • au moins un bloc polymère organique A ionique ou ionisable, présentant une charge globale nulle ou non-opposée à celle de l'agent tensioactif cationique (TAC) au pH de la formulation ou d'utilisation de la formulation,
   - le rapport pondéral ensemble des blocs B / ensemble des blocs A allant de 0,01 à 1, de préférence de 0,1 à 1
   - la charge globale du copolymère (C) étant nulle ou non-opposée à celle de l'agent tensioactif cationique (TAC), que ce soit au pH de la formulation ou au pH d'utilisation de la formulation

   ledit copolymère à architecture contrôlée (C) étant présent au sein de la formulation selon une quantité permettant d'apporter auxdits articles des propriétés d'anti-froissage et/ou de facilité de repassage.

2. Formulation selon la revendication 1), **caractérisée en ce que** le copolymère (C) est un copolymère à blocs, un copolymère ramifié ou un copolymère en étoile.

3. Formulation selon la revendication 1) ou 2), **caractérisée en ce que** le copolymère (C) est un copolymère à blocs, comprenant deux ou trois blocs.

4. Formulation selon la revendication 3), **caractérisée en ce que** le copolymère (C) est un copolymère diblocs.

5. Formulation selon l'une quelconque des revendications 1) à 4), **caractérisée en ce que** les blocs A et B dérivent de monomères éthyléniquement insaturés.

6. Formulation selon l'une quelconque des revendications 1) à 5), **caractérisée en ce que** le bloc B dérive d'au moins un monomère non-ionique hydrophobe, et éventuellement d'au moins un monomère non-ionique hydrophile et/ou éventuellement d'au moins un monomère ionique, la quantité de monomère(s) éventuel(s) de préférence ne dépassant pas 10% molaire de l'ensemble des monomères.

7. Formulation selon l'une quelconque des revendications 1) à 6), **caractérisée en ce que** le bloc B présente une masse moléculaire moyenne de 500 à 100000, de préférence de 500 à 25000 g/mol.

8. Formulation selon l'une quelconque des revendications 1) à 7), **caractérisé en ce que** le polymère constituant du bloc A est choisi parmi

   a) les polymères dérivés d'au moins un monomère hydrophile potentiellement cationique au pH de la formulation ou d'utilisation de la formulation et/ou d'au moins un monomère hydrophile cationique, et éventuellement d'au moins un monomère non-ionique ;
   b) les polymères dérivés d'au moins un monomère hydrophile zwitterionique et éventuellement d'au moins un monomère non-ionique.

9. Formulation selon la revendication 8), **caractérisée en ce que** le bloc A contient en outre au moins une unité anionique ou potentiellement anionique dérivées d'au moins un monomère anionique ou potentiellement anionique.

10. Formulation selon la revendications 8) ou 9), **caractérisée en ce que** le bloc A présente une masse moléculaire moyenne de 500 à 100000, de préférence de 500 à 25000 g/mol.

11. Formulation selon l'une quelconque des revendications 1) à 10), **caractérisée en ce que** le copolymère (C) présente une masse moléculaire moyenne en nombre de 1000 à 200000, de préférence de 1000 à 50000 g/mol, plus particulièrement de 3000 à 30000.

12. Formulation selon l'une quelconque des revendications 1) à 11), **caractérisée en ce que** le copolymère (C) est un copolymère dibloc

- polyacrylate de butyle - polyacrylate de 2-diméthylaminoéthyle éventuellement quaternisé
- polyacrylate de butte - poly(acide acrylique-stat-acrylate de 2-diméthylaminoéthyle quaternisé).

13. Formulation selon l'une quelconque des revendications 1) à 12), **caractérisée en ce que** ledit agent tensioactif cationique (TAC) est aussi bien un agent tensioactif cationique, qu'un mélange d'agents tensioactifs cationiques, de même qu'un mélange d'au moins an agent tensioactif cationique et d'au moins un agent tensioactif non-ionique.

14. Formulation selon la revendication 13), **caractérisée en ce que** l'agent tensioactif cationique est éventuellement adoucissant.

15. Formulation selon la revendication 13) ou 14), **caractérisée en ce que** l'agent tensioactif non-ionique éventuel représente jusqu'à 70% du poids de l'agent tensioactif cationique (TAC).

16. Formulation selon l'une quelconque des revendications 1) à 15), **caractérisée en ce que** ledit agent tensioactif cationique (TAC) représente de 1 à 60% du poids de la formulation.

17. Formulation selon l'une quelconque des revendications 1) à 16), **caractérisée en ce que** le rapport masse de copolymère à architecture contrôlée (C) / masse d'agent tensioactif (TAC) va de 0,0001 à 10, de préférence de 0,001 à 2.

18. Formulation selon l'une quelconque des revendications 1) à 17), **caractérisée en ce qu'**elle est destinée au traitement après lavage du linge, notamment à base de coton, en particulier contenant au moins 35% de coton.

19. Formulation selon l'une quelconque des revendications 1) à 18), **caractérisée en ce qu'**elle présente un pH de 2,5 à 11.

20. Formulation selon l'une quelconque des revendications 1) à 19), **caractérisée en ce qu'**elle est destinée au rinçage après lavage des articles en fibres textiles.

21. Formulation de rinçage selon la revendication 20), **caractérisée en ce qu'**elle présente un extrait sec de 10 à 50%.

22. Formulation de rinçage selon la revendication 20) ou 21), **caractérisée en ce qu'**elle présente un pH de 2,5 à 11.

23. Formulation de rinçage selon l'une quelconque des revendications 20) à 22), **caractérisée en ce que** le rapport masse de copolymère à architecture contrôlée (C) / masse d'agent tensioactif (TAC) va de 0,0001 à 1, de préférence de 0,0001 à 0,5 , tout préférentiellement de 0,0001 à 0,1.

24. Formulation selon l'une quelconque des revendications 1) à 19), **caractérisée en ce qu'**elle est destinée au repassage des articles en fibres textiles.

25. Formulation de repassage selon la revendication 24), **caractérisée en ce qu'**elle présente un extrait sec de 0,5 à 2%.

26. Formulation de repassage selon la revendication 24) ou 25), **caractérisée en ce qu'**elle présente un pH de 5 à 9.

**27.** Formulation de repassage selon l'une quelconque des revendications 24) à 26), **caractérisée en ce que** le rapport masse de copolymère à architecture contrôlée (C) / masse d'agent tensioactif (TAC) va de 0,0001 à 2.

**28.** Utilisation, dans une formulation aqueuse ou hydroalcoolique comprenant au moins un agent tensioactif cationique (TAC), destinée au traitement après lavage des articles en fibres textiles, d'au moins un copolymère à architecture contrôlée (C) soluble ou dispersable en milieu aqueux ou hydroalcoolique, compatible avec l'agent tensioactif (TAC) au pH de ladite formulation et au pH d'utilisation de ladite formulation, et comprenant

• au moins un bloc polymère organique hydrophobe B, non-ionique et
• au moins un bloc polymère organique A ionique ou ionisable, présentant • une charge globale nulle ou non-opposée à celle de l'agent tensioactif cationique (TAC) au pH de la formulation ou d'utilisation de la formulation,
- le rapport pondéral ensemble des blocs B / ensemble des blocs A allant de 0,01 à 1, de préférence de 0,1 à 1,
- la charge globale du copolymère (C) étant nulle ou non-opposée à celle de l'agent tensioactif cationique (TAC), que ce soit au pH de la formulation ou au pH d'utilisation de la formulation,

comme agent permettant d'apporter auxdits articles des propriétés d'anti-froissage et/ou de facilité de repassage.

**29.** Utilisation selon la revendication 28), **caractérisée en ce que** ledit copolymère (C), ledit agent tensioactif (TAC) et ladite formulation de traitement sont tels que définis à l'une quelconque des revendications 2) à 27).

**30.** Procédé pour améliorer les propriétés d'antifroissage ou d'aide au repassage d'une formulation aqueuse ou hydroalcoolique comprenant au moins un agent tensioactif cationique (TAC), pour le traitement après lavage d'articles en fibres textiles, par addition à ladite formulation d'au moins un copolymère à architecture contrôlée (C) soluble ou dispersable en milieu aqueux ou hydroalcoolique, compatible avec l'agent tensioactif (TAC) au pH de ladite formulation et au pH d'utilisation de ladite formulation, et comprenant

• au moins un bloc polymère organique hydrophobe B, non-ionique et
• au moins un bloc polymère organique A ionique ou ionisable, présentant une charge globale nulle ou non-opposée à celle de l'agent tensioactif cationiques (TAC) au pH de la formulation ou d'utilisation de la formulation
- le rapport pondéral ensemble des blocs B / ensemble des blocs A allant de 0,01 à 1, de préférence de 0,1 à 1,
- la charge globale du copolymère (C) étant nulle ou non-opposée à celle de l'agent tensioactif cationique (TAC), que ce soit au pH de la formulation ou au pH d'utilisation de la formulation,

comme agent permettant d'apporter des propriétés d'anti-froissage et/ou de facilité de repassage auxdits articles traités.

**31.** Procédé selon la revendication 29), **caractérisé en ce que** ledit copolymère (C), ledit agent tensioactif (TAC) et ladite formulation de traitement sont tels que définis à l'une quelconque des revendications 2) à 27).

**Claims**

**1.** An aqueous or aqueous-alcoholic crease-resistant formulation comprising at least one cationic surfactant (CSA), for the treatment after washing in aqueous or aqueous-alcoholic medium of articles made of textile fibers, said formulation being **characterized in that** it also comprises at least one copolymer of controlled architecture (C) that is soluble or dispersible in aqueous or aqueous-alcoholic medium, compatible with the surfactant (CSA) at the pH of said formulation and at the pH of use of said formulation, and comprising

• at least one hydrophobic organic polymer block B, which is nonionic, and
• at least one ionic or ionizable organic polymer block A, having an overall charge that is zero or not opposite that of the cationic surfactant (CSA) at the pH of the formulation or of use of the formulation
- the weight ratio: set of blocks B/set of blocks A ranging from 0.01 to 1 and preferably from 0.1 to 1,
- the overall charge of the copolymer (C) being zero or not opposite that of the cationic surfactant (CSA), whether it is at the pH of the formulation or at the pH of use of the formulation

said copolymer of controlled architecture (C) being present in the formulation in an amount that can give said articles properties of crease resistance and/or ease of ironing.

**2.** The formulation as claimed in claim 1), **characterized in that** the copolymer (C) is a block copolymer, a branched copolymer or a star copolymer.

**3.** The formulation as claimed in claim 1) or 2), **characterized in that** the copolymer (C) is a block copolymer comprising two or three blocks.

**4.** The formulation as claimed in claim 3), **characterized in that** the copolymer (C) is a diblock copolymer.

**5.** The formulation as claimed in any one of claims 1) to 4), **characterized in that** the blocks A and B are derived from ethylenically unsaturated monomers.

**6.** The formulation as claimed in any one of claims 1) to 5), **characterized in that** the block B is derived from at least one hydrophobic nonionic monomer, and optionally from at least one hydrophilic nonionic monomer and/or optionally from at least one ionic monomer, the amount of optional monomer(s) preferably not exceeding 10 mol% of all the monomers.

**7.** The formulation as claimed in any one of claims 1) to 6), **characterized in that** the block B has an average molecular mass of from 500 to 100 000, and preferably from 500 to 25 000 g/mol.

**8.** The formulation as claimed in any one of claims 1) to 7), **characterized in that** the polymer constituting the block A is chosen from

a) polymers derived from at least one hydrophilic monomer that is potentially cationic at the pH of the formulation or of use of the formulation and/or at least one cationic hydrophilic monomer, and optionally of at least one nonionic monomer;
b) polymers derived from at least one zwitterionic hydrophilic monomer and optionally from at least one nonionic monomer.

**9.** The formulation as claimed in claim 8), **characterized in that** the block A also contains at least one anionic or potentially anionic unit derived from at least one anionic or potentially anionic monomer.

**10.** The formulation as claimed in claims 8) or 9), **characterized in that** the block A has an average molecular mass of from 500 to 100 000, and preferably from 500 to 25 000 g/mol.

**11.** The formulation as claimed in any one of claims 1) to 10), **characterized in that** the copolymer (C) has a number-average molecular mass of from 1000 to 200 000, preferably from 1000 to 50 000 g/mol and more particularly from 3000 to 30 000.

**12.** The formulation as claimed in any one of claims 1) to 11), **characterized in that** the copolymer (C) is a diblock copolymer

• polybutyl acrylate - optionally quaternized poly(2-dimethylaminoethyl acrylate)
• polybutyl acrylate - poly(acrylic acid-stat-quaternized 2-dimethylaminoethyl acrylate).

**13.** The formulation as claimed in any one of claims 1) to 12), **characterized in that** said cationic surfactant (CSA) is either a cationic surfactant or a mixture of cationic surfactants, and also a mixture of at least one cationic surfactant and of at least one nonionic surfactant.

**14.** The formulation as claimed in claim 13), **characterized in that** the cationic surfactant is optionally softening.

**15.** The formulation as claimed in claim 13) or 14), **characterized in that** the optional nonionic surfactant represents up to 70% of the weight of the cationic surfactant (CSA).

**16.** The formulation as claimed in any one of claims 1) to 15), **characterized in that** said cationic surfactant (CSA) represents from 1% to 60% of the weight of the formulation.

**17.** The formulation as claimed in any one of claims 1) to 16), **characterized in that** the mass ratio of copolymer of controlled architecture (C)/mass of surfactant (CSA) ranges from 0.0001 to 10 and preferably from 0.001 to 2.

18. The formulation as claimed in any one of claims 1) to 17), **characterized in that** it is intended for the post-washing treatment of laundry, especially cotton-based laundry, in particular containing at least 35% cotton.

19. The formulation as claimed in any one of claims 1) to 18), **characterized in that** it has a pH of from 2.5 to 11.

20. The formulation as claimed in any one of claims 1) to 19), **characterized in that** it is intended for the post-washing rinsing of articles made of textile fibers.

21. The rinsing formulation as claimed in claim 20), **characterized in that** it has a dry extract of from 10% to 50%.

22. the rinsing formulation as claimed in claim 20) or 21), **characterized in that** it has a pH of from 2.5 to 11.

23. The rinsing formulation as claimed in any one of claims 20) to 22), **characterized in that** the mass ratio of copolymer of controlled architecture (C)/mass of surfactant (CSA) ranges from 0.0001 to 1, preferably from 0.0001 to 0.5 and most preferably from 0.0001 to 0.1.

24. The formulation as claimed in any one of claims 1) to 19), **characterized in that** it is intended for the ironing of articles made of textile fibers.

25. The ironing formulation as claimed in claim 24), **characterized in that** it has a dry extract of from 0.5% to 2%.

26. The ironing formulation as claimed in claim 24) or 25), **characterized in that** it has a pH of from 5 to 9.

27. The ironing formulation as claimed in any one of claims 24) to 26), **characterized in that** the mass ratio of copolymer of controlled architecture (C)/mass of surfactant (CSA) ranges, from 0.0001 to 2.

28. The use, in an aqueous or aqueous-alcoholic formulation comprising at least one cationic surfactant (CSA), for the post-washing treatment of articles made of textile fibers, of at least one copolymer of controlled architecture (C) that is soluble or dispersible in aqueous or aqueous-alcoholic medium, compatible with the surfactant (CSA) at the pH of said formulation and at the pH of use of said formulation, and comprising

   • at least one hydrophobic organic polymer block B, which is nonionic, and
   • at least one ionic or ionizable organic polymer block A, having an overall charge that is zero or not opposite that of the cationic surfactant (CSA) at the pH of the formulation or of use of the formulation
   - the weight ratio: set of blocks B/set of blocks A ranging from 0.01 to 1 and preferably from 0.1 to 1,
   - the overall charge of the copolymer (C) being zero or not opposite that of the cationic surfactant (CSA), whether it is at the pH of the formulation or at the pH of use of the formulation

   as an agent for giving said articles properties of crease resistance and/or ease of ironing.

29. The use as claimed in claim 28), **characterized in that** said copolymer (C), said surfactant (CSA) and said treatment formulation are as defined in any one of claims 2) to 27).

30. A process for improving the properties of crease resistance or ease of ironing of an aqueous or aqueous-alcoholic formulation comprising at least one cationic surfactant (CSA), for the post-washing treatment of articles made of textile fibers, by addition to said formulation of at least one copolymer of controlled architecture (C) that is soluble or dispersible in aqueous or aqueous-alcoholic medium, and that is compatible with the surfactant (CSA) at the pH of said formulation and at the pH of use of said formulation, and comprising

   • at least one hydrophobic organic polymer block B, which is nonionic, and
   • at least one ionic or ionizable organic polymer block A, having an overall charge that is zero or not opposite that of the cationic surfactant (CSA) at the pH of the formulation or of use of the formulation
   - the weight ratio: set of blocks B/set of blocks A ranging from 0.01 to 1 and preferably from 0.1 to 1,
   - the overall charge of the copolymer (C) being zero or not opposite that of the cationic surfactant (CSA), whether it is at the pH of the formulation or at the pH of use of the formulation

   as an agent for giving said treated articles properties of crease resistance and/or ease of ironing.

**31.** The process as claimed in claim 29), **characterized in that** said copolymer (C), said surfactant (CSA) and said treatment formulation are as defined in any one of claims 2) to 27).

**Patentansprüche**

**1.** Wässrige oder hydroalkoholische Antifaltenformulierung, die wenigstens ein kationisches Tensid (TAC) aufweist, zur Behandlung nach dem Waschen von Artikeln aus Textilfasern in wässrigem oder hydroalkoholischem Medium, wobei die genannte Formulierung **dadurch gekennzeichnet ist, dass** sie außerdem des Weiteren wenigstens ein Copolymer (C) mit einer kontrollierten Architektur aufweist, das in wässrigem oder hydroalkoholischem Medium lösbar oder dispergierbar ist und mit dem Tensid (TAC) bei dem pH der genannten Formulierung und bei dem pH der Verwendung der Formulierung kompatibel ist und umfasst

• wenigstens ein hydrophobes organisches Blockpolymer B, nicht-ionisch, und
• wenigstens ein ionisches oder ionisierbares organisches Blockpolymer A, dessen Gesamtladung null aufweist oder nicht zu jener des kationischen Tensids (TAC) bei dem pH der Formulierung oder dem der Verwendung der Formulierung entgegengesetzt ist,
- das Gewichtsverhältnis Gesamtheit der Blöcke B / Gesamtheit der Blöcke A 0,01 bis 1, vorzugsweise 0,1 bis 1 beträgt
- die Gesamtladung des Copolymers (C) null ist oder nicht zu jener des kationischen Tensids (TAC) entgegengesetzt ist, weder bei dem pH der Formulierung noch dem der Verwendung der Formulierung

wobei das genannte Copolymer (C) mit einer kontrollierten Architektur in der Formulierung in einer Menge vorhanden ist, die es ermöglicht, den genannten Artikeln Antifalteneigenschaften und/oder die Eigenschaft leichten Bügelns zu verleihen.

**2.** Formulierung gemäß Anspruch 1), **dadurch gekennzeichnet, dass** das Copolymer (C) ein Blockcopolymer, ein verzweigtes Polymer oder ein Sterncopolymer ist.

**3.** Formulierung gemäß Anspruch 1) oder 2), **dadurch gekennzeichnet, dass** das Copolymer (C) ein Blockcopolymer ist, das zwei oder drei Blöcke umfasst.

**4.** Formulierung gemäß Anspruch 3), **dadurch gekennzeichnet, dass** das Copolymer (C) ein Diblockcopolymer ist.

**5.** Formulierung gemäß einem der Ansprüche 1) bis 4), **dadurch gekennzeichnet, dass** die Blöcke A und B sich aus ungesättigten ethylenischen Monomeren ergeben.

**6.** Formulierung gemäß einem der Ansprüche 1) bis 5), **dadurch gekennzeichnet, dass** der Block B sich aus wenigstens einem hydrophoben nicht-ionischen Monomer ergibt, und gegebenenfalls aus wenigstens einem hydrophilen nicht-ionischen Monomer und/oder gegebenenfalls aus wenigstens einem ionischen Monomer, wobei die Menge an möglichem oder möglichen Monomer(en) 10 Mol-% der Gesamtheit an Monomeren nicht übersteigt.

**7.** Formulierung gemäß einem der Ansprüche 1) bis 6), **dadurch gekennzeichnet, dass** der Block B eine mittlere Molmasse von 500 bis 100000, vorzugsweise 500 bis 25000 g/mol aufweist.

**8.** Formulierung gemäß einem der Ansprüche 1) bis 7), **dadurch gekennzeichnet, dass** das Polymer, das den Block A bildet, gewählt ist aus

a) den Polymeren, die sich aus wenigstens einem hydrophilen Monomer ergeben, das bei dem pH der Formulierung oder dem der Verwendung der Formulierung potentiell kationisch ist, und/oder wenigstens aus einem hydrophilen kationischen Monomer, und gegebenenfalls wenigstens aus einem nicht-ionischen Monomer;
b) den Polymeren, die sich aus wenigstens einem hydrophilen zwitterionischen Monomer und gegebenenfalls aus wenigstens einem nicht-ionischen Monomer ergeben.

**9.** Formulierung gemäß Anspruch 8), **dadurch gekennzeichnet, dass** der Block A des Weiteren wenigstens eine anionische oder potentiell anionische Einheit aufweist, die von wenigstens einem anionischen oder potentiell anionischen Monomer stammt.

**10.** Formulierung gemäß Anspruch 8) oder 9), **dadurch gekennzeichnet, dass** der Block A eine mittlere Molmasse von 500 bis 100000, vorzugsweise 500 bis 25000 g/mol auf weist.

**11.** Formulierung gemäß einem der Ansprüche 1) bis 10), **dadurch gekennzeichnet, dass** das Copolymer (C) zahlenmäßig eine mittlere Molmasse von 1000 bis 200000, vorzugsweise 1000 bis 50000 g/mol, noch bevorzugter 3000 bis 30000, aufweist.

**12.** Formulierung gemäß einem der Ansprüche 1) bis 11), **dadurch gekennzeichnet, dass** das Copolymer (C) ein Diblock-Copolymer

  • Polybutylacrylat - Poly-2-Dimethylaminoethylacrylat, gegebenenfalls quarternisiert
  • Polybutylacrylat - Poly(acrylsäure-stat-2-Dimethylaminoethylacrylat), quaternisiert

ist.

**13.** Formulierung gemäß einem der Ansprüche 1) bis 12), **dadurch gekennzeichnet, dass** das genannte kationische Tensid (TAC) ebenso ein kationisches Tensid ist, das wie ein Gemisch kationischer Tenside als auch ein Gemisch aus wenigstens einem kationischen Tensid und wenigstens einem nicht-ionischen Tensid ist.

**14.** Formulierung gemäß Anspruch 13), **dadurch gekennzeichnet, dass** das kationische Tensid gegebenenfalls weichspülend ist.

**15.** Formulierung gemäß Anspruch 13) oder 14), **dadurch gekennzeichnet, dass** das nichtionische Tensid gegebenenfalls bis zu 70 Gew.-% des kationischen Tensids (TAC) darstellt.

**16.** Formulierung gemäß einem der Ansprüche 1) bis 15), **dadurch gekennzeichnet, dass** das kationische Tensid (TAC) 1 bis 60 Gew.-% der Formulierung darstellt.

**17.** Formulierung gemäß einem der Ansprüche 1) bis 16), **dadurch gekennzeichnet, dass** das Verhältnis Masse an Copolymer (C) mit kontrollierter Architektur / Masse an Tensid (TAC) von 0,0001 bis 10, vorzugsweise 0,001 bis 2 geht.

**18.** Formulierung gemäß einem der Ansprüche 1) bis 17), **dadurch gekennzeichnet, dass** sie für die Behandlung nach dem Waschen von Wäsche, insbesondere auf Basis von Baumwolle, ganz besonders mit einem Gehalt an Baumwolle von wenigstens 35%, bestimmt ist.

**19.** Formulierung gemäß einem der Ansprüche 1) bis 18), **dadurch gekennzeichnet, dass** sie einen pH von 2,5 bis 11 aufweist.

**20.** Formulierung gemäß einem der Ansprüche 1) bis 19), **dadurch gekennzeichnet, dass** sie für das Spülen nach dem Waschen von Artikeln aus Textilfasern bestimmt ist.

**21.** Formulierung zum Spülen gemäß Anspruch 20), **dadurch gekennzeichnet, dass** sie ein Trockenextrakt von 10 bis 50 % aufweist.

**22.** Formulierung zum Spülen gemäß Anspruch 20) oder 21), **dadurch gekennzeichnet, dass** sie einen pH von 2,5 bis 11 aufweist.

**23.** Formulierung zum Spülen gemäß einem der Ansprüche 20) bis 22), **dadurch gekennzeichnet, dass** das Verhältnis Masse an Copolymer (C) mit kontrollierter Architektur /Masse an Tensid (TAC) von 0,0001 bis 1, vorzugsweise 0,0001 bis 0,5, besonders bevorzugt von 0,0001 bis 0,1, geht.

**24.** Formulierung gemäß einem der Ansprüche 1) bis 19), **dadurch gekennzeichnet, dass** sie für das Bügeln von Artikeln aus Textilfasern bestimmt ist.

**25.** Formulierung zum Bügeln gemäß Anspruch 24), **dadurch gekennzeichnet, dass** sie ein Trockenextrakt von 0,5 bis 2 % aufweist.

26. Formulierung zum Bügeln gemäß Anspruch 24) oder 25), **dadurch gekennzeichnet, dass** sie einen pH von 5 bis 9 aufweist.

27. Formulierung zum Bügeln gemäß einem der Ansprüche 24) bis 26), **dadurch gekennzeichnet, dass** das Verhältnis Masse an Copolymer (C) mit kontrollierter Architektur /Masse an Tensid (TAC) von 0,0001 bis 2 geht.

28. Verwendung in einer wässrigen oder hydroalkoholischen Formulierung, die wenigstens ein kationisches Tensid (TAC) aufweist, die für die Behandlung nach dem Waschen von Artikeln aus Textilfasern bestimmt ist, von wenigstens einem Copolymer (C) mit einer kontrollierten Architektur, das in wässrigem oder hydroalkoholischem Medium lösbar oder dispergierbar ist und mit dem Tensid (TAC) bei dem pH der Formulierung und dem pH der Verwendung der Formulierung kompatibel ist, und umfasst

   • wenigstens ein hydrophobes organisches Blockpolymer B, nicht-ionisch, und
   • wenigstens ein ionisches oder ionisierbares organisches Blockpolymer A, dessen Gesamtladung null aufweist oder nicht zu jener des kationischen Tensids (TAC) bei dem pH der Formulierung oder dem der Verwendung der Formulierung entgegengesetzt ist,
   - das Gewichtsverhältnis Gesamtheit der Blöcke B / Gesamtheit der Blöcke A 0,01 bis 1, vorzugsweise 0,1 bis 1 beträgt,
   - die Gesamtladung des Copolymers (C) null ist oder nicht zu jener des kationischen Tensids (TAC) entgegengesetzt ist, weder bei dem pH der Formulierung noch dem der Verwendung der Formulierung,

   als Mittel, welches es ermöglicht, den Artikeln Antifalteneigenschaften oder Eigenschaften leichten Bügelns zu verleihen.

29. Verwendung gemäß Anspruch 28, **dadurch gekennzeichnet, dass** das Copolymer (C), das genannte Tensid (TAC) und die genannte Behandlungsformulierung wie in einem der Ansprüche 2) bis 27) definiert sind.

30. Verfahren zur Verbesserung der Antifalteneigenschaften oder der Bügelhilfeeigenschaften einer wässrigen oder hydroalkoholischen Formulierung, die wenigstens ein kationisches Tensid (TAC) umfasst, für die Behandlung nach dem Waschen von Artikeln aus Textilfasern, durch Hinzufügen zu der genannten Formulierung von wenigstens einem Copolymer (C) mit einer kontrollierten Architektur, das in wässrigem oder hydroalkoholischem Medium lösbar oder dispergierbar ist und mit dem Tensid (TAC) bei dem pH der, Formulierung und dem pH der Verwendung der Formulierung kompatibel ist und umfasst

   • wenigstens ein hydrophobes organisches Blockpolymer B, nicht-ionisch, und
   • wenigstens ein ionisches oder ionisierbares organisches Blockpolymer A, dessen Gesamtladung null aufweist oder nicht zu jener des kationischen Tensids (TAC) bei dem pH der Formulierung oder dem der Verwendung der Formulierung entgegengesetzt ist
   - das Gewichtsverhältnis Gesamtheit der Blöcke B / Gesamtheit der Blöcke A 0,01 bis1, vorzugsweise 0,1 bis 1 beträgt,
   - die Gesamtladung des Copolymers (C) null ist oder nicht zu jener des kationischen Tensids (TAC) entgegengesetzt ist, weder bei dem pH der Formulierung noch dem der Verwendung der Formulierung,

   als Mittel, welches es ermöglicht, den genannten Artikeln Antifalteneigenschaften oder Eigenschaften leichten Bügelns zu verleihen.

31. Verwendung gemäß Anspruch 29), **dadurch gekennzeichnet, dass** das genannte Copolymer (C), das genannte Tensid (TAC) und die genannte Behandlungsformulierung wie in einem der Ansprüche 2) bis 27) definiert sind.

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 0071591 A
- WO 0071660 A
- WO 9955952 A
- WO 9858974 A
- WO 0075207 A
- WO 0142312 A
- WO 9801478 A
- WO 9931144 A
- WO 0226836 A

- WO 0210223 A
- WO 9903894 A
- WO 9630421 A
- WO 0039169 A
- WO 0037507 A
- WO 0002939 A
- US 4565647 A
- WO 0068352 A

**Littérature non-brevet citée dans la description**

- **Otu et al.** *Makromol. Chem. Rapid. Commun.,* 1982, vol. 3, 127
- **Tatemoto et al.** *Jap. 50,* 1975, vol. 127, 991
- **Matyjaszewski et al.** *Macromolécules,* 1995, vol. 28, 2093
- **D. Braun et al.** *Macromol. Symp.,* 1996, vol. 111, 63

- **Wayland et al.** *J.Am.Chem.Soc.,* 1994, vol. 116, 7973
- **Kennedy, J.P.** *Macromolecules,* 1996, vol. 29, 8631
- **Deffieux, A.** *Ibid,* 1992, vol. 25, 6744
- **Gnanou, Y.** *Ibid,* 1998, vol. 31, 6748